# FASCICULE DE BREVET EUROPEEN

(11) **EP 2 795 152 B1**
(45) Date de publication et mention de la délivrance du brevet: **06.02.2019**
(21) Numéro de dépôt: 12810106.0
(22) Date de dépôt: 19.12.2012
(51) Int. Cl.: F16F 1/38, F16F 1/387, B60G 21/05

(54) **ARTICULATION ELASTIQUE NOTAMMENT POUR UNE SUSPENSION DE ROUE D'UN VEHICULE AUTOMOBILE**
ELASTISCHES GELENK, INSBESONDERE FÜR DIE AUFHÄNGUNG DER RÄDER EINES KRAFTFAHRZEUGS
RESILIENT HINGE, IN PARTICULAR FOR THE SUSPENSION OF THE WHEELS OF AN AUTOMOBILE

(30) Priorité: 21.12.2011 FR 1103986
(43) Date de publication de la demande: 29.10.2014
(73) Titulaire: Anvis SD France SAS, 58300 Decize Cedex (FR)
(72) Inventeur: THEUILLON, Ludovic, F-58340 Diennes-Aobigny (FR)
(74) Mandataire: Schmid, Nils T.F.
(86) Numéro de dépôt international: PCT/EP2012/005268
(87) Numéro de publication internationale: WO 2013/091852

(56) Documents cités:
- EP-A1- 0 248 714
- DE-C1- 3 905 686
- FR-A1- 2 830 911
- GB-A- 591 730

## Description

La présente invention concerne une articulation élastique, notamment pour une suspension de roue d'un véhicule automobile, en particulier pour une suspension d'essieu arrière du véhicule automobile.

Dans la technique automobile moderne, il est connu, en particulier pour la suspension d'essieu arrière d'une voiture particulière ainsi que de camions, de réaliser desdits paliers élastiques ou articulations élastiques, dont la structure principale est constituée d'une armature intérieure rigide, fabriquée notamment en métal, telle qu'une douille intérieure ou une barre porteuse, d'une armature extérieure telle qu'une douille extérieure, et d'un corps en élastomère intercalé entre les armatures. Le corps en élastomère a pour fonction de séparer la carrosserie du véhicule des roues sollicitées en vibration de manière à éviter de transmettre les vibrations, en particulier de l'isoler acoustiquement. Les articulations élastiques doivent aussi supporter des charges de véhicule dynamiques très élevées qui se produisent. Il existe une pluralité de modes de réalisation d'articulations élastiques, dont le corps en élastomère est généralement formé par un matériau purement élastique, des composants fonctionnels hydrauliques pouvant être ajoutés aussi.

La présente invention est dirigée principalement sur les articulations élastiques avec un corps de ressort de matériau élastomère pur entre les armatures rigides.

On connaît d'après le document EP 1 505 311 A1 un coussinet pour un véhicule automobile, constitué d'une armature intérieure rigide en forme de douille ainsi que d'une armature extérieure réalisée plus molle, en forme de douille, entre lesquelles est moulé par injection un corps en élastomère. Le réglage de la caractéristique élastique du corps en élastomère est assuré par la douille extérieure qui est pourvue d'un rétrécissement permettant de former deux sections de corps en élastomère d'épaisseur différente dans la direction radiale, dont les déformations peuvent s'influencer mutuellement. Afin de réduire la rigidité du coussinet dans une direction radiale de sorte qu'il soit réalisé de manière molle dans une direction radiale et plus rigide dans l'autre, un évidement est réalisé selon la périphérie partielle dans le corps en élastomère. Dans la direction radiale plus rigide, deux nervures radiales séparées l'une de l'autre par l'évidement sont réalisées, lesquelles sont reliées entre elles par une partie annulaire rotative en élastomère.

On connaît, d'après le document DE 32 05 716 C2, un palier d'articulation flexible élastiquement pour la liaison pivotante mutuelle d'un porte-fils avec un organe de guidage. Le corps en élastomère vulcanisé entre les armatures peut être partagé à l'aide d'un bombement médian en deux sections annulaires d'épaisseur différente dans la direction radiale. Un mode de réalisation, semblable à celui-ci, d'une articulation élastique est connu d'après le document KR 2009 009 8978 A, dans lequel la partition par section du corps en élastomère est réalisé par un rétrécissement dans l'armature extérieure.

On connaît, d'après les documents FR 2 830 911 A1, EP 0 248 714 A1, DE 39 05 686 C1 et GB 591 730 A les outres articulations flexibles elastiquements. Il s'est avéré pour les articulations élastiques connues, notamment pour une suspension d'essieu arrière de véhicules automobiles, que la grandeur caractéristique importante pour des ingénieurs automobiles, à savoir le rapport de rigidité entre la rigidité axiale et la rigidité radiale, ne pouvait pas être réalisée suffisamment élevée. Des rapports s'élevant à peine à 1,0 sont usuelles. Pour les ingénieurs automobiles, il est en particulier très intéressant que le rapport de rigidité soit élevé, une rigidité de cardan le moindre possible étant ainsi obtenue.

Afin d'optimiser de manière constructive ces grandeurs caractéristiques, il faut naturellement ne pas négliger le coût et le poids, mais plutôt les optimiser.

La présente invention a pour but de surmonter les inconvénients de l'état de la technique, en particulier de proposer une articulation élastique notamment pour une suspension de roue d'un véhicule automobile, dont le rapport de rigidité entre la rigidité axiale et la rigidité radiale est moindre pour une rigidité de cardan le plus faible possible tout en utilisant des matériaux économiques et légers.

Cet objectif est atteint par la caractéristique de la revendication 1.

Une articulation élastique est ensuite prévue notamment pour une suspension de roue d'un véhicule automobile. L'articulation élastique présente une armature intérieure, une armature extérieure entourant l'armature intérieure, sachant que notamment les deux armatures sont constituées d'un matériau rigide. Les armatures définissent une direction axiale et deux directions radiales perpendiculaires à la direction axiale ainsi que perpendiculaires l'une à l'autre dites direction radiale principale et direction radiale secondaire. La direction axiale, la direction radiale principale et la direction radiale secondaire définissent un système de coordonnées sur l'articulation élastique, sachant que le croisement de l'articulation élastique doit définir le centre géométrique de l'articulation élastique. A l'état monté de l'articulation élastique selon l'invention, la direction axiale est dans la direction verticale, sachant que les deux directions radiales sont disposées dans le plan horizontal. La direction radiale principale est positionnée dans la direction de la marche. Par conséquent, elle se situe dans la direction radiale transversalement à la direction de la marche du véhicule automobile. Les armatures peuvent être réalisées par exemple comme des douilles rigides disposées de manière concentrique les unes par rapport aux autres. Pour l'armature intérieure, un composant rigide rotatif ou formé autrement peut aussi se situer de manière concentrique dans l'armature extérieure respective. Le corps en élastomère est généralement une partie de caoutchouc pouvant être vulcanisée ou partiellement vulcanisée afin de pouvoir établir une adhérence à l'armature respective. En outre, l'articulation élastique présente un corps en élastomère pour l'appui élastique mutuel des armatures, ce qui permet d'amortir ou d'isoler les unes des autres des vibrations qui sont introduites dans l'armature extérieure ou dans l'armature intérieure. Le corps en élastomère permet que les armatures vibrent l'une par rapport à l'autre. Selon l'invention, le corps en élastomère se compose exclusivement d'au moins quatre colonnes de liaison s'étendant respectivement de l'armature intérieure à l'armature extérieure. De préférence, plus de quatre colonnes de liaison, en particulier six colonnes de liaison, définissent respectivement un corps de colonne rectiligne qui doit s'étendre dans une direction d'extension longitudinale dans l'espace. Le corps de colonne présente dans sa direction d'extension longitudinale au moins par section une section transversale constante dans le tracé des corps de colonne afin de définir des propriétés de déformation pouvant être prédéterminées. Il est clair qu'un nombre pair de colonnes de liaison peut de préférence être prévu.

La mesure selon l'invention consistant à prévoir exclusivement des colonnes de liaison en matériau élastomère entre les armatures sans corps d'élastomère généralement rotatif, à savoir au moins quatre colonnes de liaison de la sorte, permet un rapport optimisé entre la rigidité axiale et la rigidité radiale au moins dans une direction radiale principale. De préférence, toutes les colonnes de liaison s'étendent dans une seule direction radiale principale. Un rapport de rigidité entre la rigidité axiale et la rigidité radiale de 1,4 au maximum peut être obtenu. Selon l'invention, la rigidité de cardan de l'articulation élastique reste en outre particulièrement basse.

Dans une réalisation préférée de l'invention, toutes les colonnes de liaison sont fabriquées d'une seule pièce en un matériau élastomère, en particulier sont moulées par injection entre les armatures. Des mesures de vulcanisation peuvent être utilisées.

Les colonnes de liaison, de préférence des corps de colonne s'étendant en ligne droite des colonnes de liaison, peuvent être séparées structurellement de telle manière que la simple déformation d'une colonne de liaison ne puisse pas influencer seule le comportement de déformation de l'autre colonne de liaison, en particulier de la colonne de liaison adjacente. Cela signifie que la déformation isolée de la colonne de liaison n'est pas influencée par la déformation de la colonne adjacente qui peut absolument se définir pendant le déplacement relatif des armatures.

L'épaisseur des corps de colonne dans leur direction d'extension longitudinale peut de préférence rester inchangée, sachant que les points de liaison aux armatures peuvent être renforcés. De préférence, les corps de colonne de toutes les colonnes de liaison sont formés de manière identique.

Dans un mode de réalisation préféré de l'invention, les colonnes de liaison, en particulier les corps de colonne des colonnes de liaison, sont disposées sans contact les unes par rapport aux autres dans le tracé de leur direction d'extension. De cette manière, le rapport entre la rigidité radiale et la rigidité axiale peut être réglé de manière particulièrement précise, en particulier des valeurs supérieures à 1,2 ou 1,4 peuvent être obtenues selon l'invention.

On peut aussi entendre par entretoise de liaison qui s'étend dans une direction longitudinale définie, la colonne de liaison, en particulier son corps de colonne.

Dans l'invention, toutes les colonnes de liaison s'étendent principalement dans la direction radiale principale de l'armature intérieure rigide à l'armature de liaison rigide. Cela signifie que la part directionnelle de la direction d'extension de chaque colonne de liaison en direction radiale principale doit être supérieure, en particulier nettement supérieure à celle dans les autres directions comme en direction axiale ainsi qu'en direction radiale secondaire.

Il s'est avéré qu'avec la disposition principale des colonnes de liaison, en particulier de leurs corps de colonne, dans la direction radiale principale, les valeurs de rigidité axiales peuvent être maintenues élevées, sachant que la rigidité de cardan est faible.

Dans un mode de réalisation préféré de l'invention, les colonnes de liaison définissent respectivement une direction d'extension dans un espace en trois dimensions. Le corps de colonne peut définir au moins par section la direction d'extension principale en ce que le corps de colonne présente au moins par section dans son tracé une modification de section. Cette direction d'extension est inclinée de préférence par rapport à la direction radiale principale. De cette manière, une fonction de butée peut être assurée par exemple dans la direction, dans laquelle la colonne de liaison est inclinée par rapport à la direction radiale principale. De préférence, une part directionnelle de la direction d'extension des colonnes de liaison en direction radiale principale est supérieure, de préférence nettement supérieure à celle en direction radiale secondaire ainsi qu'en direction axiale.

Dans un mode de réalisation préféré de l'invention, les angles d'inclinaison respectifs des directions d'extension des colonnes de liaison sont adaptés les uns aux autres, par exemple sont sélectionnés par paire de manière sensiblement identique de telle manière qu'une rigidité de l'articulation élastique augmente dans la direction radiale secondaire et/ou dans la direction axiale quand le corps en élastomère se déformant élastiquement lors d'une charge agissant dans la direction radiale principale de l'articulation élastique, permet un mouvement relatif entre l'armature intérieure et l'armature extérieure dans la direction radiale principale. Cela signifie qu'un mouvement des armatures dans la direction radiale principale s'accompagne d'une rigidité du corps en élastomère dans la direction axiale et/ou dans la direction radiale secondaire. Cette rigidité peut être réalisée de manière forte de telle manière qu'une fonction de butée même soit obtenue dans la direction radiale secondaire respective et/ou direction radiale. L'inclinaison prédéfinie des corps de colonne de la colonne de liaison par rapport à la direction radiale principale entraîne une composante de force dans la direction radiale secondaire et/ou dans la direction axiale lors d'un déplacement des armatures dans la direction radiale principale. Cette force générée peut être utilisée afin de compliquer ou supprimer un déplacement dans la direction opposée.

Dans un mode de réalisation préféré de l'invention, les parts de direction des colonnes de liaison dans la direction radiale principale peuvent être supérieures, en particulier nettement supérieures à celles dans la direction axiale et éventuellement dans la direction radiale secondaire. De préférence, les géométries telles que les contours des corps des colonnes de liaison et/ou les angles d'inclinaison des directions d'extension, peuvent être adaptées les unes aux autres de telle manière que le corps en élastomère se déformant élastiquement lors d'une charge agissant dans la direction radiale principale permette certes un mouvement relatif entre l'armature intérieure et l'armature extérieure dans la direction radiale principale mais essentiellement sans déplacement relatif des armatures dans la direction axiale et/ou dans la direction radiale secondaire. Cela signifie que l'inclinaison en particulier légère des colonnes de liaison par rapport à la direction radiale principale doit être choisie de telle manière que les forces de déformation élastiques induites par l'inclinaison dans la direction radiale secondaire et/ou dans la direction axiale s'annulent mutuellement au moins en partie par une inclinaison correspondante en sens opposé de deux paires de colonnes de liaison, de préférence se suppriment complètement. Par conséquent, les forces de déformation n'autorisent aucun déplacement relatif des armatures dans la direction radiale secondaire et/ou dans la direction axiale.

Dans un perfectionnement de l'invention, deux paires de colonnes de liaison sont inclinées par rapport à la direction radiale principale en sens opposé dans la direction axiale et/ou dans la direction radiale secondaire de telle manière que des forces de déformation élastiques agissant dans la direction axiale et/ou dans la direction radiale secondaire qui se constituent dans les colonnes de liaison dû à un mouvement relatif entre l'armature intérieure et l'armature extérieure seulement dans la direction radiale principale, soient dirigées mutuellement en sens opposé. De préférence, ces formes de déformation s'annulent complètement mutuellement de sorte à empêcher un déplacement de l'armature dans la direction axiale et/ou dans la direction radiale secondaire.

Chaque paire de colonnes de liaison possède de préférence le même angle d'inclinaison par rapport à la direction radiale principale, dans la direction axiale et/ou dans la direction radiale secondaire, mais à l'opposé.

Dans un mode de réalisation préféré de l'invention, les directions d'extension de toutes les colonnes de liaison sont inclinées dans un angle aigu inférieur à 45°, notamment inférieur à 30°, notamment inférieur à 25° ou 20°, par rapport à la direction principale dans la direction axiale et/ou dans la direction radiale secondaire. Il peut être prévu que les colonnes de liaison soient disposées par paires les unes par rapport aux autres, et les colonnes de liaison d'une paire peuvent présenter l'angle d'inclinaison identique par rapport à la direction radiale principale. Il est clair qu'une paire de colonnes de liaison peut présenter différents angles d'inclinaison par rapport à une autre colonne de liaison.

Dans un mode de réalisation préféré de l'invention, respectivement deux colonnes de liaison s'étendent principalement dans la direction radiale principale diamétralement entre elles en éloignement de l'armature intérieure. De préférence, respectivement deux des au moins quatre colonnes de liaison sont disposées de manière symétrique à un axe par rapport à la direction radiale secondaire et/ou à la direction radiale principale. Les directions d'extension des colonnes de liaison peuvent être inclinées dans un angle aigu inférieur à 45°, notamment inférieur à 30° ou inférieur à 25° ou 20°, par rapport à la direction radiale principale ainsi que par rapport à la direction radiale secondaire et/ou à la direction axiale dans un angle aigu correspondant supérieur à 45°, en particulier 60°,67° ou 70°.

Dans un mode de réalisation préféré de l'invention, deux paires extérieures de colonnes de liaison sont prévues, lesquelles paires s'étendent principalement dans la direction radiale principale. Les colonnes de liaison des deux paires sont disposées en déport dans la direction radiale secondaire à une distance de préférence identique l'une à côté de l'autre en dehors d'un plan de direction radiale principale médian de l'articulation élastique. Les colonnes de liaison s'étendent principalement dans la direction radiale principale diamétralement en éloignement de l'armature intérieure de manière symétrique à un axe par rapport à la direction radiale secondaire.

Dans un mode de réalisation préféré de l'invention, une paire médiane de colonnes de liaison est prévue, laquelle s'étend également principalement dans la direction radiale principale. Les colonnes de liaison de la paire médiane sont disposées dans le plan de direction radiale principale médiane de l'articulation et s'étendent principalement dans la direction radiale principale diamétralement en éloignement de l'armature intérieure de manière symétrique à un axe par rapport à la direction radiale secondaire et à la direction axiale. Les directions d'extension des colonnes de liaison sont sensiblement perpendiculaires à la direction radiale secondaire mais dans un angle aigu inférieur à 45°, notamment inférieur à 30°, 25° ou 20°, par rapport à la direction radiale principale dans la direction axiale dans un angle aigu inférieur à 45°, en particulier 30°,25° ou 20°.

Dans un mode de réalisation préféré de l'invention, les colonnes de liaison, en particulier leurs corps de colonne ou d'entretoise, présentent dans le tracé de leur direction d'extension une section notamment à symétrie ponctuelle d'épaisseur constante, sachant qu'un axe médian est défini pour chaque colonne de liaison. L'axe médian peut coïncider avec la direction d'extension de la colonne de liaison. De préférence, le contour de la colonne de liaison présente une forme de section transversale carrée, en particulier avec des angles arrondis sans arête.

Dans un perfectionnement de l'invention, pour chaque colonne de liaison, les armatures forment des surfaces d'appui plates ou sensiblement planes, diamétralement opposées, notamment parallèles. Les surfaces d'appui définissent chacune une perpendiculaire qui doit se situer parallèlement à la direction d'extension ou axe central de la colonne de liaison respective.

Dans un perfectionnement de l'invention, l'armature extérieure présente une structure annulaire notamment fermée, sur le côté intérieur annulaire de laquelle dépasse respectivement une saillie destinée à la réalisation d'une surface d'appui pour la colonne de liaison afin de réduire une distance radiale de la surface d'appui de l'armature extérieure par rapport au point central géométrique de l'articulation élastique. De cette manière, la longueur du corps de colonne de la colonne de liaison peut être raccourcie et la rigidité dans la direction radiale réglée. De préférence, la structure annulaire et la saillie sont fabriquées d'une seule pièce, en particulier moulées par injection dans une pièce de matière plastique. La structure annulaire et la saillie peuvent être revêtues de préférence en particulier sur leur côté intérieur complètement par le matériau élastomère.

Dans un perfectionnement de l'invention, l'armature intérieure présente sensiblement une structure de base en forme de barre avec une section transversale rectangulaire régulière et éventuellement un alésage de réception, sur lequel la partie de véhicule respective peut être fixée. L'alésage de réception peut s'étendre de préférence exclusivement dans la direction axiale. Sur chaque côté longitudinal s'étendant dans la direction axiale de la structure de base en forme de barre, une saillie de préférence cunéiforme peut être réalisée pour la formation d'une surface d'appui côté armature intérieure pour respectivement une colonne de liaison. La saillie ainsi que la structure de base en forme de barre peuvent être fabriquées d'une seule pièce, en particulier en plastique ou métal.

D'autres aspects, avantages et caractéristiques selon l'invention sont prévus par la suite.

D'autres propriétés, avantages et caractéristiques de l'invention sont clarifiés à l'aide d'un mode de réalisation préféré de l'invention décrit par la suite en référence aux dessins joints, dont les figures représentent :
figure 1 : une vue en perspective d'un palier élastique selon l'invention ;
figure 2 : une vue de côté de l'articulation élastique selon l'invention selon la figure 1 dans la direction axiale ;
figure 3 : une vue de côté de l'articulation élastique selon la figure 1 dans la direction radiale secondaire ;
figure 4 : une vue de section transversale du palier élastique le long de la ligne de coupe IV-IV selon la figure 3 ;
figure 5 : une vue de section transversale de l'articulation élastique le long de la ligne de coupe V-V selon la figure 2 ;
figure 6 : une vue de section transversale de l'articulation élastique le long de la ligne de coupe VI-VI selon la figure 2 ;
figure 7 : une vue en perspective de l'armature extérieure de l'articulation élastique selon les figures 1 à 6 ;
figure 8 : une vue en perspective de l'armature intérieure de l'articulation élastique selon les figures 1 à 6 ;
figure 9 : une vue schématique d'un véhicule automobile à zones avec la disposition selon l'invention de l'articulation élastique selon l'invention.

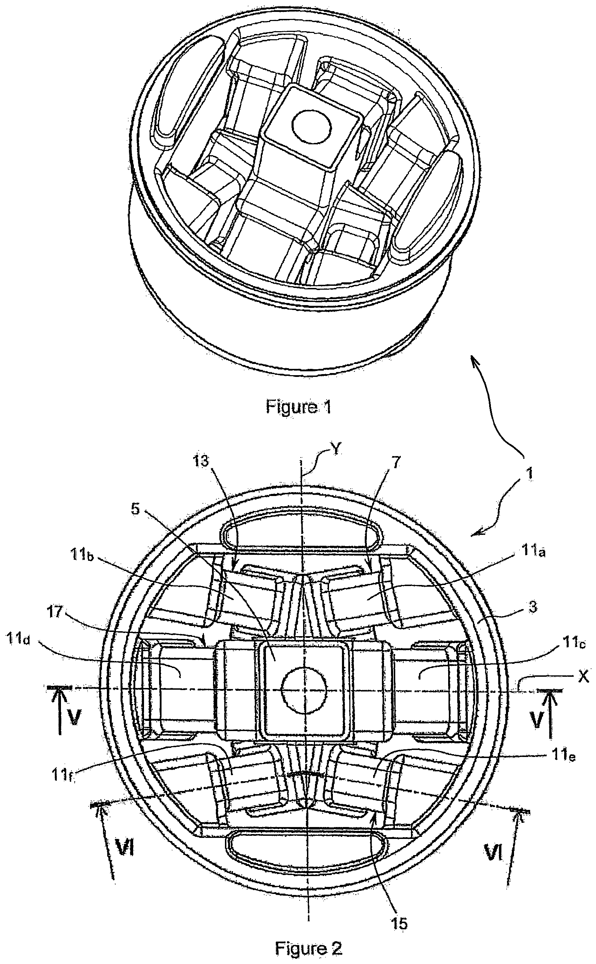

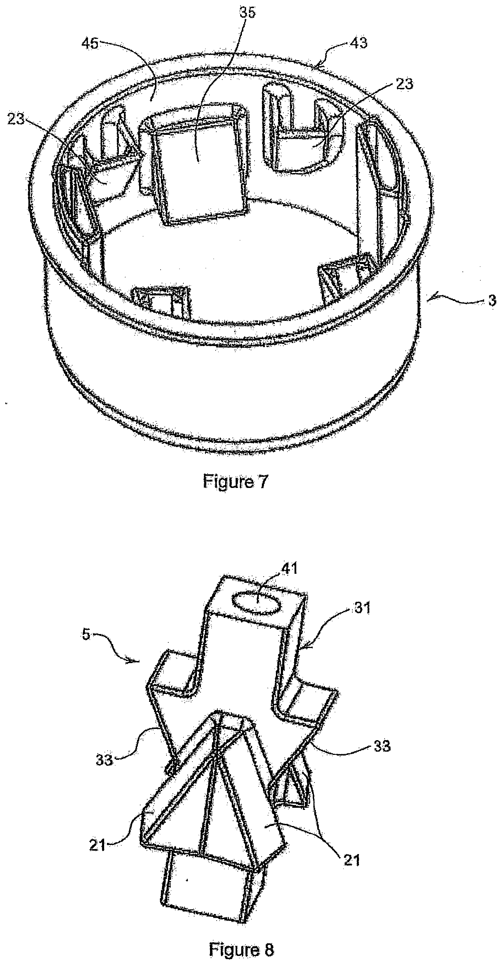

Sur les figures 1 à 6, l'articulation élastique selon l'invention pour la suspension d'une roue de véhicule automobile est généralement pourvue de la référence chiffrée 1. L'articulation élastique 1 présente sensiblement trois composants principaux, à savoir une armature extérieure 3 rigide en particulier en matière plastique, une armature intérieure rigide 5 en particulier en métal et un corps de ressort 7 en matériau élastomère. Par la suite, la structure particulière du corps de ressort 7 est décrite à l'aide des figures 1 à 6. La structure détaillée de l'armature extérieure est expliquée en référence à la figure 7, alors que la structure spéciale de l'armature intérieure 5 est décrite à l'aide de la figure 8.

Comme il ressort bien de la figure 2, le corps de ressort 7 se compose de six colonnes de liaison en forme d'entretoises 11a à 11f Chacune des colonnes de liaison 11a à 11f présente un corps de colonne avec une section transversale sensiblement carrée qui reste intacte dans le tracé des colonnes de liaison 11a à 11f. Le corps de colonne est arrondi dans les zones de bord.

Toutes les colonnes de liaison 11a à 11f ou entretoises de liaison du corps de ressort 7 s'étendent principalement dans une direction radiale principale X qui se trouve perpendiculaire à la direction radiale secondaire Y et à la direction axiale Z. Les six colonnes de liaison 11a à 11f sont réparties par paires de respectivement deux colonnes de liaison 11a, 11b et 11c, 11d et 11e, 11f. Deux paires extérieures 13, 15 sont prévues, lesquelles sont disposées en déport par rapport à un plan de direction radiale principale, dans lequel la direction radiale principale X se situe, en direction de la direction radiale secondaire Y. La distance de déport des deux paires de colonne de liaison 13, 15 jusqu'au plan de direction radiale principale X est de même grandeur. En outre, une paire de colonne de liaison 17 médiane est prévue, laquelle se situe sensiblement dans le plan de liaison radiale principale.

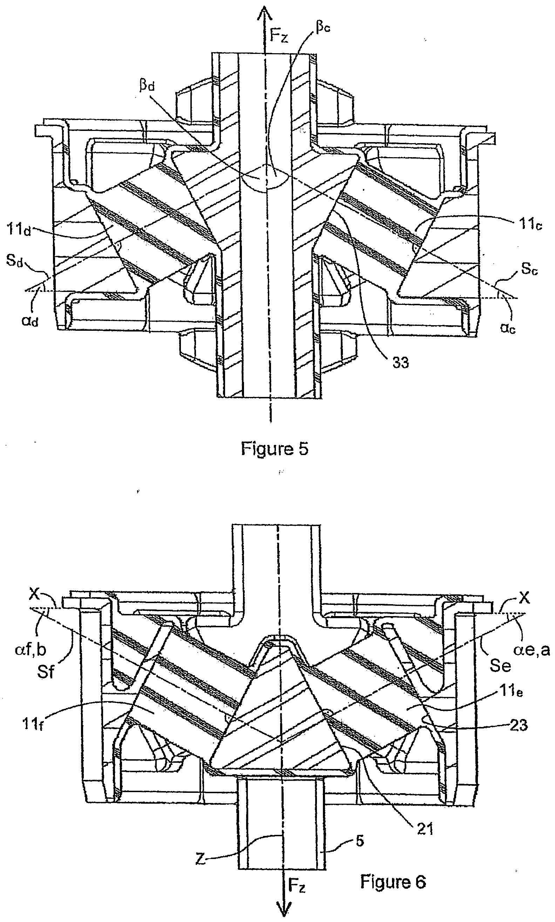

Les colonnes de liaison 11c et 11d de la paire médiane 17 s'étendent principalement dans la direction radiale principale X et ne sont inclinées que par rapport à la direction axiale Z, ce qui est nettement reconnaissable sur les figures 2 et 5. Les colonnes de liaison 11c et 11d de la paire médiane 17 ne présentent aucune inclinaison dans la direction radiale secondaire Y. Les deux colonnes de liaison 11c, 11d sont inclinées de manière identique par rapport à la direction radiale principale X dans la direction axiale Z.

L'angle d'inclinaison des colonnes de liaison peut être défini du fait qu'un axe médian ou une direction d'extension Sa à Sf est défini pour chaque colonne de liaison 11c et 11d. La direction d'extension Sa à Sf ou l'axe médian peut former l'axe de rotation du corps de colonne des colonnes de liaison 11a à 11f.

Comme il ressort en particulier de la figure 5, les colonnes de liaison 11c et 11d de la paire médiane 17 sont inclinées par rapport à la direction radiale principale X dans un angle ac, ad qui est inférieur à 45°, de préférence est compris à peu près entre 25° et 30°. L'angle d'inclinaison des directions d'extension Sc, Sd par rapport à la direction axiale Z est défini par βc et βd qui est en conséquence supérieur à 45°, est compris à peu près entre 60° et 65°.

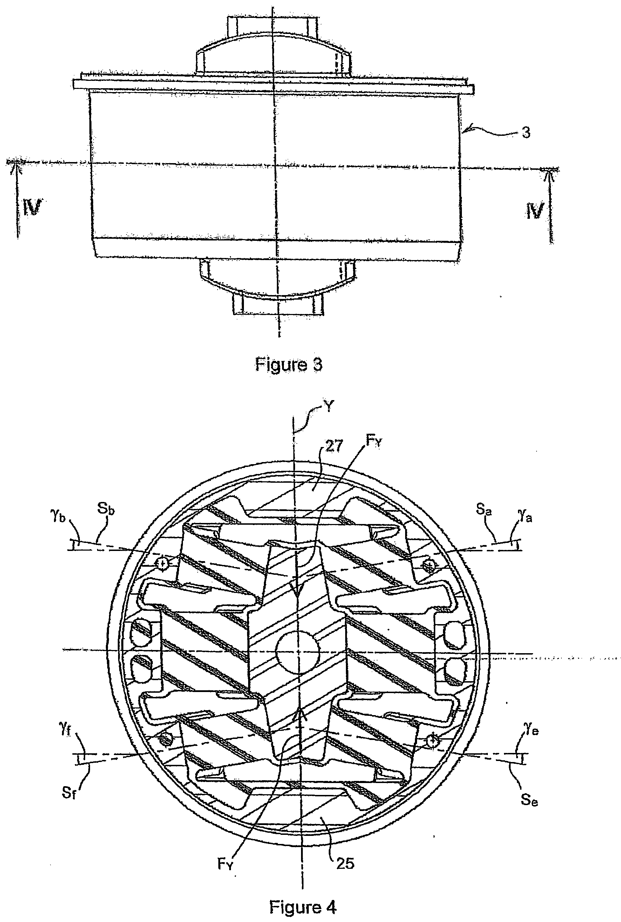

Les colonnes de liaison 11a à 11f fonctionnent comme une entretoise molle et définissent dans le système de coordonnées XYZ une direction d'extension Sa à Sf qui est indiquée sur les figures 4, 5 et 6.

La section transversale des colonnes de liaison 11a à 11f est formée de manière sensiblement rectangulaire, la forme rectangulaire présentant des angles arrondis pour la diminution des pointes de tension dans la zone angulaire. Les colonnes de liaison 11a à 11f présentent dans leur direction d'extension longitudinale une épaisseur sensiblement identique, au moins en ce qui concerne les paires respectives 13, 15 et 17. Dans la zone d'appui ou de pied des colonnes de liaison 11a à 11f, celles-ci sont réalisées de manière renforcée afin de garantir un bon apport de force dans l'armature rigide respective.

Comme il ressort des figures 2 et 5, la direction d'extension Sc et Sd des colonnes de liaison 11c, 11d, en particulier de leurs corps de colonne, de la paire médiane 17 est inclinée par rapport à la direction radiale principale X seulement dans la direction axiale Z. Les colonnes de liaison 11c, 11d ne sont pas inclinées par rapport à la direction radiale secondaire Y. Les angles d'inclinaison respectifs αe, αf de la direction d'extension Se et Sf des colonnes de liaison 11e et 11f par rapport à la direction radiale principale dans la direction radiale secondaire sont compris à peu près entre 20° et 30° et sont sensiblement de même grandeur. Si le corps en élastomère 7 se composait justement des colonnes de liaison 11c et 11d, un déplacement relatif de l'armature intérieure 5 par rapport à l'armature extérieure 3 dans la direction axiale Z s'accompagnerait d'un mouvement relatif des armatures 3 et 5 dans la direction principale de charge (direction radiale principale X) en raison de l'inclinaison des directions d'extension Se, Sf des colonnes de liaison 11e et 11f. Plus l'angle d'inclinaison ae, af est choisi élevé, plus le mouvement relatif dans la direction Z est important. Comme il ressort de la figure 2, la paire de colonnes de liaison 17 concernant la direction radiale secondaire Y se trouve au milieu de l'articulation 1 et s'étend principalement dans la direction radiale principale X avec l'angle d'inclinaison correspondant αe et αf par rapport à la direction axiale Z.

Comme il ressort en outre de la figure 5, les paires de colonne de liaison 13, 15 décalées de l'axe radial principal X dans la direction radiale secondaire Y sont inclinées les unes par rapport aux autres de manière opposée par rapport à la direction axiale Z. De cette manière, des forces de déplacement Fz axiales sont réalisées dans la direction axiale Z lors d'une charge dans la direction axiale principale X et d'un mouvement des armatures 3, 5. L'angle d'inclinaison ac, ad dans la direction axiale Z sont sensiblement de même grandeur.

Comme il ressort de la figure 6, les colonnes de liaison 11e et 11f d'une paire extérieure 15 s'appuient sur des surfaces d'appui opposées 21, 23 des armatures 3,5 qui sont parallèles les unes aux autres et dont la perpendiculaire coïncide avec la direction d'extension Se et Sf.

En outre, il est facilement reconnaissable sur la figure 6 que les tracés des colonnes de liaison 11e, 11f sont symétriques non seulement dans la direction radiale secondaire mais aussi dans la direction axiale. Les contours tels que l'épaisseur, la longueur, etc. et le corps de colonne sont aussi choisis de manière identique de sorte que les comportements de déformation des deux colonnes de liaison 11e et 11f soient sensiblement identiques et puissent être prédéterminés.

Lors d'une déformation en raison d'un mouvement de charge entre l'armature intérieure 5 et l'armature extérieure 3, des forces de direction axiale FZA sont générées dans les colonnes de liaison 11e, 11f, dont la grandeur ne dépend pas de l'intensité de déformation.

La paire extérieure de colonne de liaison 13 opposée symétriquement, les deux paires extérieures 13, 15 sont symétriques à l'axe de direction radiale principale X, est réalisée de manière identique à la paire extérieure de colonne de liaison 15.

Les colonnes de liaison 11a, 11b, 11e, 11f définissent chacune respectivement une direction d'extension Sa, Sb, Se et Sf qui sont inclinées de manière identique en angle respectivement non seulement par rapport à la direction axiale Z mais aussi par rapport à la direction radiale secondaire Y. De cette manière, des forces de déplacement opposées Fy sont suscitées dans la direction radiale secondaire Y en raison de la déformation élastique du corps de colonne, lesquelles s'annulent mutuellement en raison d'angles d'inclinaison identiques, opposés et de l'uniformité des corps de colonne des colonnes de liaison 11a, 11b, 11e, 11f.

Pour éviter un déplacement des armatures 3, 5 dans la direction axiale Z, les angles d'inclinaison αa, αb, αe, αf ainsi que l'épaisseur des corps de colonne des colonnes de liaison 11a, 11b, 11e, 11f sont adaptés par rapport à l'angle d'inclinaison ac, ad et au contour des corps de colonne des colonnes de liaison 11c, 11d de la paire médiane 17 de sorte que les forces de déplacement respectives, générées dans les colonnes de liaison 11a à 11f s'annulent mutuellement dans la direction axiale Z.

De cette manière, il est obtenu que lors d'une charge pure dans la direction axiale principale X, un déplacement de l'armature intérieure 5 par rapport à l'armature extérieure 3 ne soit permis ni dans la direction axiale Z ni dans la direction radiale secondaire Y en raison de la déformation du corps de ressort. Naturellement, les armatures 3, 5 peuvent réaliser en raison de la déformabilité du corps de ressort un déplacement dans la direction radiale secondaire Y et direction axiale Z.

Une amplitude de déplacement dans la direction radiale secondaire Y est délimitée par les butées 25, 27 qui s'opposent diamétralement dans la direction radiale secondaire Y. Une fonction de butée dans la direction axiale Z est réalisée par l'inclinaison en sens opposé des colonnes de liaison 11a à 11f dans la direction axiale Z.

La déformation du corps de ressort 7 dans la direction radiale principale X par une charge appliquée sur l'articulation 1 et un déplacement de l'armature intérieure 5 par rapport à l'armature extérieure dans la direction radiale principale X s'accompagne d'une augmentation de la rigidité de l'articulation élastique 1 dans la direction axiale Z ou dans la direction radiale secondaire Y parce que les forces de déformation FZ et FY agissent contre un déplacement. De cette manière, un rapport optimisé entre la rigidité axiale et la rigidité radiale s'élevant en gros à 1,2 est réalisé.

Une configuration de l'armature extérieure est visible sur la figure 7, l'armature extérieure 3 présentant une structure annulaire de base sous la forme d'une douille annulaire 43, du côté intérieur 45 de laquelle dépassent des saillies opposées par paire, en particulier des saillies creuses qui forment respectivement une surface d'appui plane 23 ou 35.

L'armature extérieure 3 est moulée par injection dans une pièce en matière plastique. Les butées 25, 27 sont aussi réalisées par une structure creuse.

La forme extérieure de l'armature intérieure 5 est représentée sur la figure 8, laquelle présente une forme de base 31 rectangulaire en section transversale, sensiblement en forme de barre. Afin de former des surfaces d'appui 21, 33 pour les colonnes de liaison, des saillies cunéiformes dépassent des surfaces latérales de la forme de base en forme de barre 31 qui sont inclinées symétriquement au plan médian. Les deux paires extérieures 13, 15 de colonnes de liaison 11a, b, e, f sont disposées sur les surfaces d'appui 21. Entre les deux surfaces d'appui 21 extérieures est formée une autre saillie cunéiforme avec une surface d'appui 33 inclinée à l'opposé, lesquelles sont réalisées aussi de manière symétrique au plan médian. L'armature intérieure 5 présente un perçage débouchant 41 pour le logement d'une partie de fixation de la carrosserie.

Les surfaces d'appui respectives 21, 33 présentent des perpendiculaires qui se trouvent parallèles à la direction d'extension Sa à Sf.

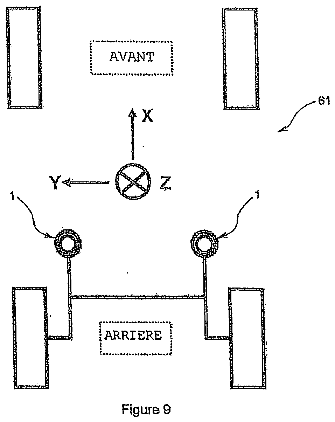

La figure 9 représente schématiquement une voiture particulière (61), les axes de coordonnées XYZ étant indiqués. Le lieu de montage de l'articulation élastique selon l'invention 1 sur l'essieu arrière est représenté par paire, sachant qu'il ressort que la direction axiale Z coïncide avec la direction verticale.

Les caractéristiques divulguées dans le présent document peuvent revêtir une certaine importance non seulement individuellement mais aussi en combinaison quelconque pour la réalisation de l'invention dans les différentes configurations.

### Liste des numéros de référence

- 1: Articulation élastique
- 3: Armature extérieure
- 5: Armature intérieure
- 7: Corps de ressort
- 11ₐ à 11_{f}: Colonnes de liaison
- 13, 15: Paires extérieures
- 17: Paire de colonnes de liaison médiane
- 21, 23, 33, 35: Surfaces d'appui
- 25, 27: Butées
- 31: Forme de base
- 41: Perçage débouchant
- 43: Douille annulaire
- 45: Côté intérieur
- 61: Voiture particulière
- αₐ, βₐ, γₐ à α_{b}, β_{b}, γ_{b}: Angles d'inclinaison
- FY, FZ: Forces de déformation
- Sₐ à S_{f}: Direction d'extension
- X: Direction radiale principale
- Y: Direction radiale secondaire
- Z: Direction axiale

## Revendications

1. Articulation élastique (1) notamment pour une suspension de roue d'un véhicule automobile, comprenant : une armature intérieure (5), une armature extérieure (3) entourant l'armature intérieure, en sorte que les armatures (3, 5) définissent une direction axiale (Z) et deux directions radiales perpendiculaires à la direction axiale et perpendiculaires l'une à l'autre dites direction radiale principale (X) et direction radiale secondaire (Y), et un corps en élastomère (7) pour l'appui élastique mutuel des armatures (3, 5), **caractérisée en ce que** le corps en élastomère (7) se compose d'au moins quatre colonnes de liaison (11ₐ, 11_{b}, 11_{c}, 11_{d}, 11ₑ, 11_{f}) s'étendant respectivement de l'armature intérieure (5) à l'armature extérieure (3) et **en ce, que** toutes les colonnes de liaison (11ₐ, 11_{b}, 11_{c}, 11_{d}, 11ₑ, 11_{f}) s'étendent principalement dans la direction radiale principale (X) de l'armature intérieure à l'armature extérieure.

2. Articulation selon la revendication 1, **caractérisée en ce que** les colonnes de liaison (11ₐ, 11_{b}, 11_{c}, 11_{d}, 11ₑ, 11_{f}) sont fabriquées d'une seule pièce en matériau élastomère et les colonnes de liaison, de préférence des corps de colonne des colonnes de liaison s'étendant en ligne droite sont séparés structurellement les uns des autres de telle manière que la simple déformation d'une colonne de liaison n'influence pas le comportement de déformation des autres colonnes de liaison, notamment de la colonne de liaison adjacente.

3. Articulation selon la revendication 1 ou 2, **caractérisée en ce que** les colonnes de liaison (11ₐ, 11_{b}, 11_{c}, 11_{d}, 11ₑ, 11_{f}) sont disposées sans contact dans le tracé de leur corps de colonne en direction d'extension.

4. Articulation selon l'une quelconque des revendications précédentes, **caractérisée en ce que** toutes les colonnes de liaison (11ₐ, 11_{b}, 11_{c}, 11_{d}, 11ₑ, 11_{f}) s'étendent en ligne droite.

5. Articulation selon l'une quelconque des revendications précédentes, **caractérisée en ce que** les colonnes de liaison (11ₐ, 11_{b}, 11_{c}, 11_{d}, 11ₑ, 11_{f}) définissent chacune une direction d'extension inclinée par rapport à la direction radiale principale (X), notamment en ligne droite, dont la part directionnelle en direction radiale principale (X) est supérieure à celle en direction radiale secondaire (Y) et en direction axiale (Z), notamment des angles d'inclinaison (α, β, γ) des directions d'extension étant adaptés les uns aux autres de telle manière qu'une rigidité de l'articulation élastique augmente dans la direction radiale secondaire (Y) et/ou dans la direction axiale (Z) quand le corps en élastomère (7), se déformant élastiquement lors d'une charge agissant dans la direction radiale principale (X), permet un mouvement relatif entre l'armature intérieure (5) et l'armature extérieure (3) dans la direction radiale principale (X).

6. Articulation selon l'une quelconque des revendications précédentes, **caractérisée en ce que** les colonnes de liaison (11ₐ, 11_{b}, 11_{c}, 11_{d}, 11ₑ, 11_{f}) définissent chacune une direction d'extension inclinée par rapport à la direction radiale principale (X), dont la part directionnelle en direction radiale principale (X) est supérieure à celle en direction axiale (Z) et éventuellement en direction radiale secondaire (Y), notamment les géométries, telles que les contours des corps des colonnes de liaison et/ou les angles d'inclinaison (α, β, γ) des directions d'extension, étant adaptées les unes aux autres de telle manière que le corps en élastomère (7) se déformant élastiquement lors d'une charge agissant dans la direction radiale principale (X) permette un mouvement relatif entre l'armature intérieure (5) et l'armature extérieure (3) dans la direction radiale principale (X) essentiellement sans déplacement relatif des armatures (3, 5) dans la direction axiale (Z) et/ou dans la direction radiale secondaire (Y).

7. Articulation selon l'une quelconque des revendications précédentes, **caractérisée en ce que** respectivement deux colonnes de liaison (11ₐ, 11_{b}; 11c, 11_{d}; 11ₑ, 11_{f}) sont inclinées par rapport à la direction radiale principale (X) respectivement en sens opposé l'une à l'autre de manière que des forces de déformation agissant dans la direction axiale (Z) et/ou dans la direction radiale secondaire (Y), qui se constituent dans les colonnes de liaison dû au mouvement relatif entre l'armature intérieure (5) et l'armature extérieure (3) dans la direction radiale principale (X), soient dirigées mutuellement en sens opposé et s'annulent de préférence complètement mutuellement de sorte à empêcher un déplacement relatif des armatures (3, 5) dans la direction axiale (Z) et/ou dans la direction radiale secondaire (Y).

8. Articulation selon l'une quelconque des revendications précédentes, **caractérisée en ce que** les directions d'extension de toutes les colonnes de liaison (11ₐ, 11_{b}, 11_{c}, 11_{d}, 11ₑ, 11_{f}) sont inclinées dans un angle aigu inférieur à 45°, notamment inférieur à 30° ou inférieur à 20°, par rapport à la direction radiale principale (X).

9. Articulation selon l'une quelconque des revendications précédentes, **caractérisée en ce que** respectivement deux colonnes de liaison (11_{c}, 11_{d}) s'étendent principalement dans la direction radiale principale (X) diamétralement entre elles en éloignement de l'armature intérieure, notamment respectivement deux des au moins quatre colonnes de liaison étant disposées de manière symétrique à un axe par rapport à la direction radiale secondaire (Y) et/ou à la direction radiale principale (X), et/ou les directions d'extension des colonnes de liaison étant inclinées dans un angle aigu inférieur à 45°, notamment inférieur à 30° ou inférieur à 20°, par rapport à la direction radiale principale (X) et étant inclinées par rapport à la direction radiale secondaire (Y) et/ou à la direction axiale (Z) dans un angle aigu supérieur à 45°, notamment 60° ou 70°.

10. Articulation selon l'une quelconque des revendications précédentes, **caractérisée en ce que** deux paires extérieures de colonnes de liaison (11ₐ, 11_{b}; 11ₑ, 11_{f}) sont prévues, lesquelles paires sont disposées en déport dans la direction radiale secondaire (Y) à une distance l'une à côté de l'autre en dehors d'un plan de direction radiale principale (X) de l'articulation et s'étendent principalement dans la direction radiale principale (X) diamétralement en éloignement de l'armature intérieure de manière symétrique à un axe par rapport à la direction radiale secondaire (Y).

11. Articulation selon l'une quelconque des revendications précédentes, **caractérisée en ce qu'**une paire médiane de colonnes de liaison (11_{c}, 11_{d}) est prévue, lesquelles sont disposées à l'intérieur d'un plan de direction radiale principale (X) de l'articulation et s'étendent dans la direction radiale principale (X) diamétralement en éloignement de l'armature intérieure de manière symétrique à un axe par rapport à la direction radiale secondaire (Y) et à la direction axiale (Z) et leur direction d'extension est sensiblement perpendiculaire à la direction radiale secondaire (Y) et est inclinée dans un angle aigu inférieur à 45°, notamment inférieur à 30° ou inférieur à 20°, par rapport à la direction radiale principale (X) et est inclinée par rapport à la direction axiale (Z) dans un angle aigu supérieur à 45°, notamment 60° ou 70°.

12. Articulation selon l'une quelconque des revendications précédentes, **caractérisée en ce que** les colonnes de liaison (11ₐ,11_{b},11ₑ,11_{d},11ₑ,11_{f}) dans le tracé de leur direction d'extension présentent un contour notamment à symétrie ponctuelle et d'épaisseur constante avec un axe médian qui définit la direction d'extension, de préférence le contour des colonnes de liaison présentant une forme de section transversale carrée avec un angle arrondi sans arête.

13. Articulation selon l'une quelconque des revendications précédentes, **caractérisée en ce que** pour chaque colonne de liaison (11ₐ,11_{b},11_{c},11_{d},11ₑ,11_{f}), les armatures (3, 5) forment des surfaces d'appui (21, 23, 33, 35) sensiblement planes, diamétralement opposées, notamment parallèles, dont les perpendiculaires se situent parallèlement à la direction d'extension de la colonne de liaison respective.

14. Articulation selon l'une quelconque des revendications précédentes, **caractérisée en ce que** l'armature extérieure (3) présente une structure annulaire notamment fermée, sur le côté intérieur annulaire de laquelle est réalisée respectivement une saillie destinée à la réalisation d'une surface d'appui (23, 35) pour la colonne de liaison, de préférence la structure annulaire et la saillie étant moulées par injection dans une pièce de matière plastique.

15. Articulation selon l'une quelconque des revendications précédentes, **caractérisée en ce que** l'armature intérieure (5) présente une structure de base (31) en forme de barre avec une section transversale rectangulaire régulière et éventuellement un alésage de réception (41) qui s'étend dans la direction axiale, la structure de base (31) ayant au moins une saillie cunéiforme pour la formation d'une surface d'appui (21, 33) respectivement pour une colonne de liaison étant réalisée sur chaque côté longitudinal s'étendant dans la direction axiale (Z) de la structure de base.

## Patentansprüche

1. Elastisches Gelenk (1), insbesondere für eine Radaufhängung eines Kraftfahrzeugs, umfassend: eine innere Bewehrung (5), eine äußere Bewehrung (3), die die innere Bewehrung umgibt, so dass die Bewehrungen (3,5) eine axiale Richtung (Z) und zwei radiale Richtungen senkrecht zu der axialen Richtung und senkrecht zueinander, radiale Hauptrichtung (X) und radiale Sekundärrichtung (Y) genannt, definieren, und einen Körper aus Elastomer (7) für das gegenseitige elastische Aufliegen der Bewehrungen (3,5), **dadurch gekennzeichnet, dass** der Körper aus Elastomer (7) mindestens vier Verbindungssäulen (11ₐ, 11_{b}, 11_{c}, 11_{d}, 11ₑ, 11_{f}) umfasst, die sich jeweils von der inneren Bewehrung (5) zu der äußeren Bewehrung (3) erstrecken, und dass sich alle Verbindungssäulen (11ₐ, 11_{b}, 11_{c}, 11_{d}, 11ₑ, 11_{f}) hauptsächlich in die radiale Hauptrichtung (X) von der inneren Bewehrung zu der äußeren Bewehrung erstrecken.

2. Gelenk nach Anspruch 1, **dadurch gekennzeichnet, dass** die Verbindungssäulen (11ₐ, 11_{b}, 11_{c}, 11_{d}, 11ₑ, 11_{f}) aus einem einzigen Stück aus Elastomermaterial hergestellt sind, und die Verbindungssäulen, bevorzugt Säulenkörper der Verbindungssäulen, die sich in gerader Linie erstrecken, strukturmäßig voneinander derart getrennt sind, dass die einfache Verformung einer Verbindungssäule das Verformungsverhalten der anderen Verbindungssäulen, insbesondere der benachbarten Verbindungssäule, nicht beeinflusst.

3. Gelenk nach Anspruch 1 oder 2, **dadurch gekennzeichnet, dass** die Verbindungssäulen (11ₐ, 11_{b}, 11_{c}, 11_{d}, 11ₑ, 11_{f}) berührungslos in dem Verlauf ihrer Säulenkörper in Ausdehnungsrichtung angeordnet sind.

4. Gelenk nach einem der vorstehenden Ansprüche, **dadurch gekennzeichnet, dass** sich alle Verbindungssäulen (11ₐ, 11_{b}, 11_{c},11_{d}, 11ₑ, 11_{f}) in gerader Linie erstrecken.

5. Gelenk nach einem der vorstehenden Ansprüche, **dadurch gekennzeichnet, dass** die Verbindungssäulen (11ₐ, 11_{b}, 11_{c}, 11_{d}, 11ₑ, 11_{f}) jeweils eine Ausdehnungsrichtung definieren, die bezüglich der radialen Hauptrichtung (X) geneigt ist, insbesondere in gerader Linie, deren Richtungsteil in radiale Hauptrichtung (X) größer ist als der in radiale Sekundärrichtung (Y) und in axiale Richtung (Z), wobei insbesondere Neigungswinkel (α, β, γ) der Ausdehnungsrichtungen zueinander derart angepasst sind, dass eine Steifigkeit des elastischen Gelenks in die radiale Sekundärrichtung (Y) und/oder in die axiale Richtung (Z) zunimmt, wenn der Körper aus Elastomer (7), der sich bei einer Last, die in die radiale Hauptrichtung (X) wirkt, elastisch verformt, eine relative Bewegung zwischen der inneren Bewehrung (5) und der äußeren Bewehrung (3) in die radiale Hauptrichtung (X) erlaubt.

6. Gelenk nach einem der vorstehenden Ansprüche, **dadurch gekennzeichnet, dass** die Verbindungssäulen (11ₐ, 11_{b}, 11_{c}, 11_{d}, 11ₑ, 11_{f}) jeweils eine bezüglich der radialen Hauptrichtung (X) geneigte Ausdehnungsrichtung definieren, deren Richtungsteil in radiale Hauptrichtung (X) größer ist als der in axiale Richtung (Z) und eventuell in radiale Sekundärrichtung (Y), insbesondere die Geometrien, so dass die Konturen der Körper der Verbindungssäulen und/oder die Neigungswinkel (α, β, γ) der Ausdehnungsrichtungen aneinander derart angepasst sind, dass der Körper aus Elastomer (7), der sich elastisch bei einer Last, die in die radiale Hauptrichtung (X) wirkt, verformt, eine relative Bewegung zwischen der inneren Bewehrung (5) und der äußeren Bewehrung (3) in die radiale Hauptrichtung (X) im Wesentlichen ohne relative Verlagerung der Bewehrungen (3, 5) in die axiale Richtung (Z) und/oder in die radiale Sekundärrichtung (Y) erlaubt.

7. Gelenk nach einem der vorstehenden Ansprüche, **dadurch gekennzeichnet, dass** jeweils zwei Verbindungssäulen (11ₐ, 11_{b}, 11_{c},11_{d}, 11ₑ, 11_{f}) bezüglich der radialen Hauptrichtung (X) jeweils in entgegengesetzte Richtung zueinander derart geneigt sind, dass Verformungskräfte, die in die axiale Richtung (Z) und/oder in die radiale Sekundärrichtung (Y) wirken, die sich in den Verbindungssäulen aufgrund einer relativen Bewegung zwischen der inneren Bewehrung (5) und der äußeren Bewehrung (3) in die radiale Hauptrichtung (X) bilden, in entgegengesetzte Richtung zueinander ausgerichtet sind und sich bevorzugt gegenseitig vollständig derart aufheben, dass eine relative Verlagerung der Bewehrungen (3, 5) in die axiale Richtung (Z) und/oder in die radiale Sekundärrichtung (Y) verhindert wird.

8. Gelenk nach einem der vorstehenden Ansprüche, **dadurch gekennzeichnet, dass** die Ausdehnungsrichtungen aller Verbindungssäulen (11ₐ, 11_{b}, 11_{c}, 11_{d}, 11ₑ, 11_{f}) mit einem spitzen Winkel kleiner als 45°, insbesondere kleiner als 30° oder kleiner als 20° bezüglich der radialen Hauptrichtung (X) geneigt sind.

9. Gelenk nach einem der vorstehenden Ansprüche, **dadurch gekennzeichnet, dass** sich jeweils zwei Verbindungssäulen (11ₑ, 11_{d}) hauptsächlich in die radiale Hauptrichtung (X) diametral zueinander erstrecken, indem sie sich von der inneren Bewehrung entfernen, wobei insbesondere jeweils zwei der mindestens vier Verbindungssäulen symmetrisch zu einer Achse bezüglich der radialen Sekundärrichtung (Y) und/oder der radialen Hauptrichtung (X) angeordnet sind, und/oder die Ausdehnungsrichtungen der Verbindungssäulen mit einem spitzen Winkel kleiner als 45°, insbesondere kleiner als 30° oder kleiner als 20° bezüglich der radialen Hauptrichtung (X) geneigt sind und bezüglich der radialen Sekundärrichtung (Y) und/oder der axialen Richtung (Z) mit einem spitzen Winkel größer als 45°, insbesondere 60° oder 70° geneigt sind.

10. Gelenk nach einem der vorstehenden Ansprüche, **dadurch gekennzeichnet, dass** zwei äußere Paare von Verbindungssäulen (11ₐ, 11_{b}; 11ₑ, 11_{f}) vorgesehen sind, wobei die Paare in die radiale Sekundärrichtung (Y) in einem Abstand eine neben der anderen außerhalb einer Ebene mit radialer Hauptrichtung (X) des Gelenks angeordnet sind und sich hauptsächlich in die radiale Hauptrichtung (X) diametral beim Entfernen von der inneren Bewehrung symmetrisch zu einer Achse bezüglich der radialen Sekundärrichtung (Y) erstrecken.

11. Gelenk nach einem der vorstehenden Ansprüche, **dadurch gekennzeichnet, dass** ein mittleres Paar von Verbindungssäulen (11_{c}, 11_{d}) vorgesehen ist, die im Inneren einer Ebene mit radiale Hauptrichtung (X) des Gelenks angeordnet sind und sich in die radiale Hauptrichtung (X) diametral beim Entfernen von der inneren Bewehrung symmetrisch zu einer Achse bezüglich der radialen Sekundärrichtung (Y) und zu der axialen Richtung (Z) erstrecken, und ihre Ausdehnungsrichtung im Wesentlichen zu der radialen Sekundärrichtung (Y) senkrecht und mit einem spitzen Winkel kleiner als 45°, insbesondere kleiner als 30° oder kleiner als 20° bezüglich der radialen Hauptrichtung (X) geneigt ist und bezüglich der axialen Richtung (Z) mit einem spitzen Winkel größer als 45°, insbesondere 60° oder 70° geneigt ist.

12. Gelenk nach einem der vorstehenden Ansprüche, **dadurch gekennzeichnet, dass** die Verbindungssäulen (11ₐ, 11_{b}, 11_{c}, 11_{d}, 11ₑ, 11_{f}) in dem Verlauf ihrer Ausdehnungsrichtung eine Kontur insbesondere mit stellenweiser Symmetrie und konstanter Stärke mit einer Mittenachse aufweisen, die die Ausdehnungsrichtung definiert, wobei die Kontur der Verbindungssäulen bevorzugt einen quadratischen Querschnitt mit einem gerundeten Winkel ohne Kante aufweist.

13. Gelenk nach einem der vorstehenden Ansprüche, **dadurch gekennzeichnet, dass** für jede Verbindungssäule (11ₐ, 11_{b}, 11_{c}, 11_{d}, 11ₑ, 11_{f}) die Bewehrungen (3, 5) Auflageoberflächen (21, 23, 33, 35) aufweisen, die im Wesentlichen flach, diametral entgegengesetzt, insbesondere parallel sind, deren Senkrechten parallel zu der Ausdehnungsrichtung der jeweiligen Verbindungssäule liegen.

14. Gelenk nach einem der vorstehenden Ansprüche, **dadurch gekennzeichnet, dass** die äußere Bewehrung (3) eine Ringstruktur, die insbesondere geschlossen ist, aufweist, auf deren Innenseite jeweils ein Vorsprung hergestellt ist, der für die Herstellung einer Auflageoberfläche (23, 35) für die Verbindungssäule bestimmt ist, wobei die ringförmige Struktur und der Vorsprung bevorzugt durch Einspritzen in ein Teil aus Kunststoff geformt sind.

15. Gelenk nach einem der vorstehenden Ansprüche, **dadurch gekennzeichnet, dass** die innere Bewehrung (5) eine Basisstruktur (31) in Stangenform mit einem regelmäßigen Querschnitt aufweist, und eventuell eine Aufnahmebohrung (41), die sich in die axiale Richtung erstreckt, wobei die Basisstruktur (31) mindestens einen keilförmigen Vorsprung für das Bilden einer Auflageoberfläche (21, 33) jeweils für eine Verbindungssäule aufweist, die auf jeder Längsseite hergestellt ist, die sich in die axiale Richtung (Z) der Basisstruktur erstreckt.

## Claims

1. A resilient hinge (1), in particular for the suspension of the wheels of an automobile, comprising an inner frame (5), an outer frame (3) surrounding the inner frame (5) such that the frames (3, 5) define an axial direction (Z) and two radial directions that are perpendicular to the axial direction and perpendicular to each other, referred to as a main radial direction (X) and a secondary radial direction (Y), and an elastomeric body (7) for the mutual resilient support of the frames (3, 5), **characterized in that** the elastomeric body (7) comprises at least four linking columns (11ₐ, 11_{b}, 11_{c}, 11_{d}, 11ₑ, 11_{f}) extending respectively from the inner frame (5) to the outer frame (3), and **in that** all the linking columns (11ₐ, 11_{b}, 11_{c}, 11_{d}, 11ₑ, 11_{f}) extend principally in the main radial direction (X) from the inner frame to the outer frame.

2. The hinge according to Claim 1, **characterized in that** the linking columns (11ₐ, 11_{b}, 11_{c}, 11_{d}, 11ₑ, 11_{f}) are made from a single piece of elastomeric material and the linking columns, preferably column bodies of the linking columns extending in a straight line are separated structurally from one another such that the simple deformation of a linking column does not influence the deformation behaviour of the other linking columns, in particular of the adjacent linking column.

3. The hinge according to Claim 1 or 2, **characterized in that** the linking columns (11ₐ, 11_{b}, 11_{c}, 11_{d}, 11ₑ, 11_{f}) are disposed without contact in the line of their column body in the extending direction.

4. The hinge according to any one of the preceding claims, **characterized in that** all the linking columns (11ₐ, 11_{b}, 11_{c}, 11_{d}, 11ₑ, 11_{f}) extend in a straight line.

5. The hinge according to any one of the preceding claims, **characterized in that** the linking columns (11ₐ, 11_{b}, 11_{c}, 11_{d}, 11ₑ, 11_{f}) each define an extending direction which is inclined with respect to the main radial direction (X), in particular in a straight line, the directional portion of which in main radial direction (X) is greater than that in secondary radial direction (Y) and in axial direction (Z), in particular angles of inclination (a, b, g) of the extension directions being adapted to one another such that a rigidity of the resilient hinge increases in the secondary radial direction (Y) and/or in the axial direction (Z) when the elastomeric body (7), deforming elastically during a load acting in the main radial direction (X), permits a relative movement between the inner frame (5) and the outer frame (3) in the main radial direction (X).

6. The hinge according to any one of the preceding claims, **characterized in that** the linking columns (11ₐ, 11_{b}, 11_{c}, 11_{d}, 11ₑ, 11_{f}) each define an extension direction which is inclined with respect to the main radial direction (X), the directional portion of which in main radial direction (X) is greater than that in axial direction (Z) and possibly in secondary radial direction (Y), in particular the geometries, such as the contours of the bodies of the linking columns and/or the angles of inclination (a, b, g) of the extension directions, being adapted to one another such that the elastomeric body (7) deforming elastically during a load acting in the main radial direction (X) permits a relative movement between the inner frame (5) and the outer frame (3) in the main radial direction (X) substantially without relative displacement of the frames (3, 5) in the axial direction (Z) and/or in the secondary radial direction (Y).

7. The hinge according to any one of the preceding claims, **characterized in that** respectively two linking columns (11ₐ, 11_{b}; 11_{c}, 11_{d}; 11ₑ, 11_{f}) are inclined with respect to the main radial direction (X) respectively in the opposite direction to one another such that deformation forces acting in the axial direction (Z) and/or in the secondary radial direction (Y), which are established in the linking column due to the relative movement between the inner frame (5) and the outer frame (3) in the main radial direction (X), are directed mutually in the opposite direction and cancel one another preferably completely mutually so as to prevent a relative displacement of the frames (3, 5) in the axial direction (Z) and/or in the secondary radial direction (Y).

8. The hinge according to any one of the preceding claims, **characterized in that** the extension directions of all the linking columns (11ₐ, 11_{b}, 11_{c}, 11_{d}, 11ₑ, 11_{f}) are inclined in an acute angle less than 45°, in particular less than 30° or less than 20°, with respect to the main radial direction (X).

9. The hinge according to any one of the preceding claims, **characterized in that** respectively two linking columns (11ₑ, 11_{d}) extend principally in the main radial direction (X) diametrically between them at a distance from the inner frame, in particular two of the at least four linking columns being disposed symmetrically to an axis with respect to the secondary radial direction (Y) and/or to the main radial direction (X), and/or the extension directions of the linking columns being inclined in an acute angle less than 45°, in particular less than 30° or less than 20°, with respect to the main radial direction (X) and being inclined with respect to the secondary radial direction (Y) and/or to the axial direction (Z) in an acute angle greater than 45°, in particular 60° or 70°.

10. The hinge according to any one of the preceding claims, **characterized in that** two outer pairs of linking columns (11ₐ, 11_{b}; 11ₑ, 11_{f}) are provided, which pairs are disposed offset in the secondary radial direction (Y) at a distance one beside the other outside a plane of main radial direction (X) of the hinge and extending principally in the main radial direction (X) diametrically at a distance from the inner frame symmetrically to an axis with respect to the secondary radial direction (Y).

11. The hinge according to any one of the preceding claims, **characterized in that** a median pair of linking columns (11_{c}, 11_{d}) is provided, which are disposed in the interior of a plane of main radial direction (X) of the hinge and extend in the main radial direction (X) diametrically at a distance from the inner frame symmetrically to an axis with respect to the secondary radial direction (Y) and to the axial direction (Z) and their extension direction is substantially perpendicular to the secondary radial direction (Y) and is inclined in an acute angle less than 45°, in particular less than 30° or less than 20°, with respect to the main radial direction (X) and is inclined with respect to the axial direction (Z) in an acute angle greater than 45°, in particular 60° or 70°.

12. The hinge according to any one of the preceding claims, **characterized in that** the linking columns (11ₐ, 11_{b}, 11_{c}, 11_{d}, 11ₑ, 11_{f}) in the line of their extension direction have a contour in particular having a point symmetry and a constant thickness with a median axis which defines the extension direction, preferably the contour of the linking columns presenting a square cross-section shape with a rounded angle without an edge.

13. The hinge according to any one of the preceding claims, **characterized in that** for each linking column (11ₐ, 11_{b}, 11_{c}, 11_{d}, 11ₑ, 11_{f}) the frames (3, 5) form substantially flat support surfaces (21, 23, 33, 35), diametrically opposed, in particular parallel, the perpendiculars of which are situated parallel to the extension direction of the respective linking column.

14. The hinge according to any one of the preceding claims, **characterized in that** the outer frame (3) has an annular structure which is, in particular, closed, on the annular inner side of which there is respectively formed a projection intended for the formation of a support surface (23, 35) for the linking column, preferably the annular structure and the projection being injection-moulded in a piece of plastic material.

15. The hinge according to any one of the preceding claims, **characterized in that** the inner frame (5) has a base structure (31) in the form of a bar with a regular rectangular cross-section and possibly a receiving bore (41) which extends in the axial direction, the base structure (31) having at least one wedge-shaped projection for the formation of a support surface (21, 33) respectively for a linking column being formed on each longitudinal side extending in the axial direction (Z) of the base structure.
